# EUROPÄISCHE PATENTSCHRIFT

(11) **EP 1 607 063 B1**
(45) Veröffentlichungstag und Bekanntmachung des Hinweises auf die Patenterteilung: **04.07.2007**
(21) Anmeldenummer: 04405370.0
(22) Anmeldetag: 17.06.2004
(51) Int. Cl.: A61C 8/00

(54) **Abnehmbare Zahnprothesen-Verbindung**
Removable tooth prosthesis connection
Connexion pour une prothèse amovible

(43) Veröffentlichungstag der Anmeldung: 21.12.2005
(73) Patentinhaber: Unor AG (Unor SA) (Unor Ltd), 8952 Schlieren (CH)
(72) Erfinder: Püntener, Erhard, 5445 Eggenwil (CH); Greder, Rudolf, 5453 Remetschwil (CH); Luck, Peter, 8957 Spreitenbach (CH)
(74) Vertreter: Frauenknecht, Alois J.

(56) Entgegenhaltungen:
- EP-A- 0 803 232
- AT-B- 375 012
- DE-A- 19 835 778

## Beschreibung

Die vorliegende Erfindung bezieht sich auf eine Zahnprothesen-Verbindung gemäss dem Oberbegriff des Anspruchs 1.

In der Zahnmedizin (Prothetik) werden Zahnersatze, Brücken und Vollprothesen mittels sogenannter Attachments (Befestigungsmittel) mit Implantaten und/oder Wurzelkappen verbunden. Bekannt sind hierfür u.a. Kugelpatrizen (festsitzende Kugelteile) auf welche Matrizen mit Retensionselementen aufgesetzt ("aufgeklinkt") werden. Diese sowie funktionsgleiche Varianten in zylindrischer oder in Stegform erlauben in praxi dem Zahnarzt eine Vielzahl an individuellen, abnehmbaren Konstruktionen auszuführen, bzw. Anpassungen an die Bedürfnisse der Patienten vorzunehmen.

Zur Reinigung (Mundhygiene) müssen diese Teil- oder Vollprothesen mehrmals täglich von ihren Patrizen abgenommen und wieder auf diese aufgesetzt werden, was zu mechanischen Belastungen, Ermüdungserscheinungen und Abrieb an den Retensionselementen (Feder oder Kunststoffhülsen) sowie zum Verschleiss an den Patrizen führt. Ein notwendig gewordener Ersatz resultiert zwangsläufig in Ungenauigkeiten in der Passung und macht oft aufwendige und kostspielige Neuanfertigungen, sogar von vollständigen Prothesen, notwendig.

Es ist daher Aufgabe der Erfindung die Lebensdauer von solchen Attachments massgeblich zu erstrecken. Dabei soll das mit dem Träger (Implantat oder Wurzelkappe) verbundene Teil des Attachments derart ausgebildet sein, dass dessen Auswechseln - unter normalen Einsatzbedingungen - nie notwendig ist.

Diese Aufgabe ist durch die Merkmale des Anspruchs 1 gelöst.

Zwar ist es aus der DE -A1- 198 35 778 bekannt, Aluminiumoxid-Keramik als Material für die Patrize zu verwenden, um eine Spaltkorrosion zu vermeiden, nämlich weil Aluminiumoxid nicht leitend ist. Auch in der US -A1- 5 571 016 ist Aluminiumoxid als Material für die zylindrische Patrize erwähnt. Dabei handelt es sich allerdings nicht um eine abnehmbare Verbindung. Dementsprechend wäre auch eine federnde Verbindung zwischen Patrize und Matrize abwegig.

Die im vorliegendem Patentanspruch genannte Oberfläche ist das eigentliche positive Kupplungselement und kann bei einwandfreier Verbindung mit dessen Träger nahezu beliebig dünnwandig ausgestaltet sein. Ebenfalls kann diese Oberfläche eine nahezu beliebige geometrische Form aufweisen, sie muss lediglich - als positives Teil - in das negative Teil, nämlich die Matrize eingreifen können und dort kraftschlüssig gehalten werden.

So lassen sich bisher verwendete Konstruktionsteile wie Stege etc. partiell mit einer nach dem Patentanspruch ausgebildeten Oberfläche versehen und verschleissfrei gestalten. Vgl. Anspruch 2.

In weiteren abhängigen Ansprüchen sind vorteilhafte Weiterbildungen der Erfindung beschrieben.

Zahlreich keramische Werkstoffe, Anspruch 3, erfüllen nicht nur die Anforderungen an die Härte von wenigstens 400 HV, sie sind zudem aufgrund ihrer toxischen Unbedenklichkeit, der geringen elektrischen und thermischen Leitfähigkeit, ihrer guten chemischen und thermischen Resistenz und der hohen Druckfestigkeit für Anwendungen im Dentalbereich geeignet. Daraus hergestellte Patrizen verhindern u.a. im leicht sauren Speichel des Mundes galvanische Effekte an Prothesen, dies zwischen den einzelnen elektrisch leitenden Materialien unterschiedlicher Potentiale.

Bewährt haben sich Rubine, Anspruch 4, insbesondere wegen deren glatten, polierbaren hygienischen Oberfläche und deren Wirkung als Dielektrikum. Die Beeinflussung des elektrischen Feldes im besonders sensiblen Kopfbereich lässt sich damit reduzieren bzw. Feldbildungen lassen sich voneinander trennen oder begrenzen.

Günstig ist eine in der Patrize eingelassene Bohrung nach Anspruch 5 mit einem passend eingeführten Trägerzapfen. Damit kann die Stabilität der Patrize beträchtlich erhöht werden.

Auf ihrem Träger verklebte Patrizen lassen sich ohne Kavitäten und Spalte abdichten; Anspruch 6.

Ein besonders guter Halt von stark beanspruchten Prothesen kann durch eine in Anspruch 7 genannte äussere Ausnehmung (Nut, Rille) erzielt werden, in welche Ausnehmung das Federelement der Matrize eingreift, Anspruch 8.

Die hohe Härte und damit Abriebfestigkeit der Patrize eignet sich hervorragende für Retensionsfedern nach Anspruch 9.

Bewährt hat sich eine zweiteilige Ausgestaltung der Matrize entsprechend Anspruch 10.

Die Konstruktion nach Anspruch 11 erlaubt auch ein nachträgliches Auswechseln und Anpassen von Retensionsfedern unterschiedliche Klemmwirkung, sowie deren Ersatz im Falle ihrer Abnutzung oder des Bruchs.

Durch zusätzliche Beschichtungen, Anspruch 12, beispielsweise im Nanometerbereich können Schmiertaschen in die Patrize eingebaut werden, welche insbesondere das Abnehmen von Prothesen erlauben.

Es zeigen:
- Fig. 1: eine Kugelpatrize auf ihrem lötfähigen Trägerteil aufgeklebt, in Schnittdarstellung,
- Fig. 2: eine gleichartige Kugelpatrize auf einer Implantatschraube,
- Fig. 3: eine stegartige Patrize mit glatter Oberfläche,
- Fig. 4: eine zylinderförmige Patrize mit einer ringförmigen Ausnehmung und
- Fig. 5: eine Schnittdarstellung durch einen überkronten Zahn mit einer Kugelpatrize.

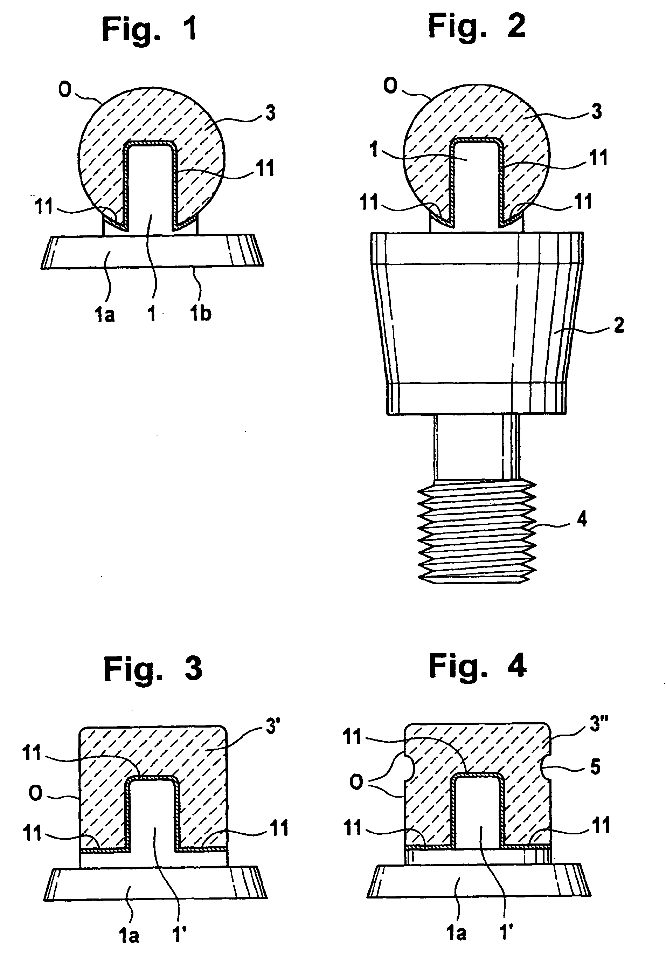

In Figur 1 ist ein zylinderförmiger Träger mit 1 bezeichnet. Eine Kugelpatrize 3 ist mit ihrer - nicht näher bezeichneten - Bohrung auf den Träger 1 aufgeklebt. Ein Klebefilm 11 schliesst den Träger 1 und die Patrize 3 Flüssigkeitsdicht ab. Die Oberfläche O der Patrize 3 ist glatt poliert und kugelkalottenförmig. Der Träger 1 ist einstückig mit einer Lötkappe 1a verbunden, diese besitzt unten eine Lötfläche 1b.

In den nachfolgenden Figuren sind gleiche Funktionsteile mit gleichen Bezugsziffern versehen.

Gemäss Fig. 2 ist in analoger Weise die Patrize 3 auf einer Implantatschraube 2 aufgebaut; das in das Implantat eingeschraubte Gewinde ist mit der Bezugsziffer 4 versehen.

In Fig. 3 ist eine längliche Stegpatrize 3', im Querschnitt gezeichnet. Mehrere Träger 1' sind hier auf einer Lötkappe 1a vorgesehen und weisen ebenfalls eine zylindrische Form auf.

Figur 4 zeigt eine weitere Variante einer zylindrischen Patrize 3", diese besitzt zusätzlich eine seitliche Ausnehmung 5 in Form einer Rille, in welche eine kreisringförmige Retensionsfeder eingreifen kann.

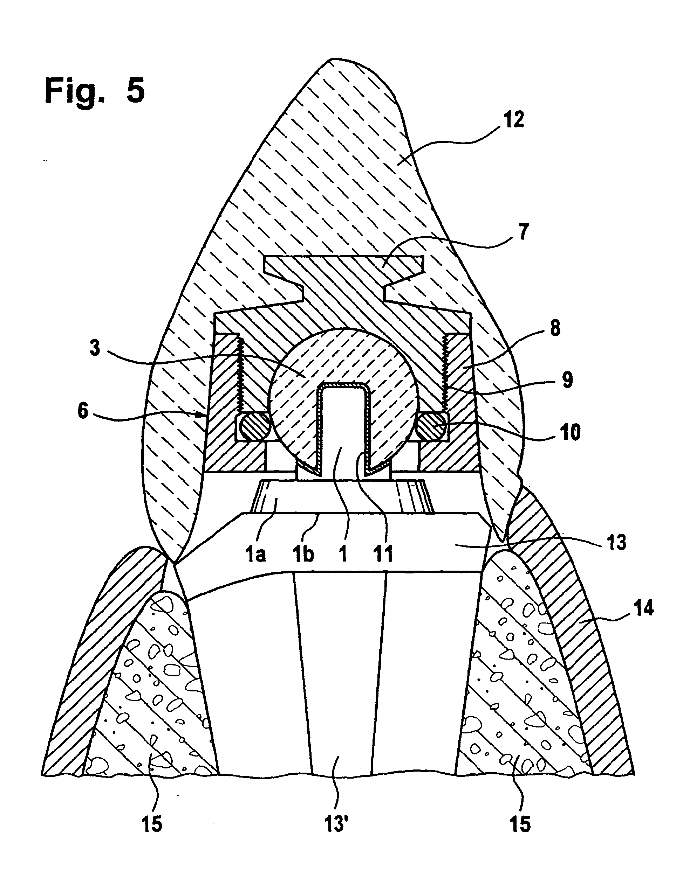

Die Darstellung Fig. 5 zeigt eine Patrize 3, aufgelötet auf einer sogenannten Wurzelkappe 13 mit Stift 13' und aufgesetzter zweiteiliger Matrize 6, die in einem Ersatzzahn 12 eingelassen ist.

Eine an sich bekannte Rentensionskappe 7 ist mittels einer Gewindeverbindung 9 durch eine Gewindemuffe 8 längsseits umschlossen. Zwischen einem flanschartigen Ende der Muffe 8 und dem unteren Ende der Kappe 7 ist ein ringförmiger Hohlraum ersichtlich, in dem eine kreisringförmige Retensionsfeder 10 frei beweglich geführt ist. Der Aufbau des Zahnersatzes in einem körpereigenen Zahnstumpf 15 mit Zahnfleisch (oder Prothesenteil) 14, ist notorisch bekannt.

Für sämtliche Ausführungsbeispiele bewährt sich als Patrizenmaterial Rubin, welches mit in der in der Uhrenindustrie entwickelten Methoden bearbeitet wurde: Die Bohrungen sind sämtliche durch Sublimierverdampfen mittels Laser hergestellt.

Als Klebstoff zur Ausbildung eines biokompatiblen Klebefilms 11 wird derzeit Nimetic-Cem (Handelsmarke der 3M ESPE AG, D-82229 Seefeld) eingesetzt, der aufgrund seiner kurzen Topfzeit eine sehr speditive Verarbeitung erfordert.

Generell kann durch den Erfindungsgegenstand der Metallanteil im Mund reduziert werden. Zudem lassen sich einzelne Bereiche, insbesondere an metallhaltigen Prothesen, voneinander elektrisch isolieren. Dies ist von besonderer Bedeutung beim Einsatz von Handys durch Prothesenträger, wirkt doch das im Mund enthaltene Metall als Empfangsantenne für ultrakurze Wellen, deren Energie über die Implantate geleitet das Nervensystem ungünstig beeinflusst.

Selbstverständlich gelten sämtliche Ausführungen nicht nur für Verbindungselemente an Zahnersatz und Prothesen, sie können vom Fachmann auch auf Geschiebe und ähnliche Elemente übertragen werden.

### Bezeichnungsliste

- 1, 1': Träger
- 1a: Lötkappe von 1
- 1b: Lötfläche / Lötschicht
- 2: Implantatschraube
- 3: Kugelpatrize
- 3': Stegpatrize (mit glatter Oberfläche)
- 3": Zylinderpatrize
- 4: Gewinde
- 5: Ausnehmung (Rille)
- 6: Matrize
- 7: Retensionskappe
- 8: Gewindemuffe / Retensionsmuffe
- 9: Gewindeverbindung
- 10: Retensionsfeder
- 11: Klebefilm
- 12: Ersatzzahn
- 13: Wurzelkappe
- 13': Stift
- 14: Zahnfleisch (oder Prothesenteil)
- 15: Zahnstumpf

## Patentansprüche

1. Abnehmbare Zahnprothesen-Verbindung bestehend aus einer festsitzenden Patrize und einer darauf aufgesetzten Matrize mit einer Retensionsfeder (10), wobei zumindest die Oberfläche (O) der Patrize (3) aus einem Werkstoff mit einer Härte von wenigstens 400 Vickers besteht.

2. Zahnprothesen-Verbindung nach Anspruch 1, wobei die Oberfläche (O) der Patrize (3) kugelförmig ist.

3. Zahnprothesen-Verbindung nach Anspruch 1 oder 2, wobei zumindest die Oberfläche (O) aus Aluminiumoxid besteht oder solches enthält.

4. Zahnprothesen-Verbindung nach Anspruch 3, wobei das das Aluminiumoxid ein Rubin ist.

5. Zahnprothesen-Verbindung nach einem der vorangehenden Ansprüche, wobei die Patrize (3, 3', 3") eine Bohrung aufweist, in welche ein zapfenartiger Träger (1, 1') ragt.

6. Zahnprothesen-Verbindung nach Anspruch 5, wobei die Patrize (3, 3' 3") und der Träger (1,1') miteinander verklebt sind.

7. Zahnprothesen-Verbindung nach Anspruch 1, wobei die Patrize (3") wenigstens eine äussere, Ausnehmung besitzt.

8. Zahnprothesen-Verbindung nach einem der Ansprüche 1 bis 7, wobei die Retensionsfeder (10) kreisförmig ist.

9. Zahnprothesen-Verbindung nach Anspruch 8, wobei die Retensionsfeder (10) aus einem legierten, nichtrostenden Federstahl besteht.

10. Zahnprothesen-Verbindung nach Anspruch 8 oder 9, wobei die Matrize (6) zweiteilig ausgebildet ist.

11. Zahnprothesen-Verbindung nach Anspruch 9, wobei die Matrize (6) aus einer Retensionskappe (7) mit einem Aussengewinde und einer Retensionsmuffe (8) mit einem Innengewinde gebildet ist, und wobei die Retensionsmuffe (8) die Kappe (7) flanschartig überragt, wobei der derart gebildete Zwischenraum die Retensionsfeder (10) aufnimmt

12. Zahnprothesen-Verbindung nach Anspruch 1, wobei die Oberfläche (O) eine reibungsvermindernde Beschichtung aufweist.

## Claims

1. A removable dental prosthesis connection consisting of a fixed male part and a female part, mounted thereon, comprising a retention spring (10), wherein at least the surface (O) of the male part (3) consists of a material with a hardness of at least 400 Vickers.

2. A dental prosthesis connection according to Claim 1, wherein the surface (O) of the male part (3) is spherical.

3. A dental prosthesis connection according to Claim 1 or 2, wherein at least the surface (O) consists of aluminium oxide or contains the same.

4. A dental prosthesis connection according to Claim 3, wherein the aluminium oxide is a ruby.

5. A dental prosthesis connection according to one of the preceding claims, wherein the male part (3, 3', 3 ") comprises a bore into which a pin-like support (1, 1') projects.

6. A dental prosthesis connection according to Claim 5, wherein the male part (3, 3', 3") and the support (1, 1') are glued together.

7. A dental prosthesis connection according to Claim 1, wherein the male part (3") has at least one, outer, recess.

8. A dental prosthesis connection according to one of Claims 1 to 7, wherein the retention spring (10) is circular.

9. A dental prosthesis connection according to Claim 8, wherein the retention spring (10) consists of an alloyed, stainless spring steel.

10. A dental prosthesis connection according to Claim 8 or 9, wherein the female part (6) is designed as two parts.

11. A dental prosthesis connection according to Claim 9, wherein the female part (6) is formed from a retention cap (7) with an external thread and a retention sleeve (8) with an internal thread, and wherein the retention sleeve (8) overlaps the cap (7) in the manner of a flange, the space therebetween formed in this way accommodating the retention spring (10).

12. A dental prosthesis connection according to Claim 1, wherein the surface (O) has a friction-reducing coating.

## Revendications

1. Assemblage pour prothèse dentaire amovible constitué d'un poinçon fixe et d'une matrice mise en place sur ce dernier avec un ressort de contention (10), au moins la surface (O) du poinçon (3) se composant d'un matériau d'une dureté d'au moins 400 Vickers.

2. Assemblage pour prothèse dentaire suivant la revendication 1, dans lequel la surface (O) du poinçon (3) est sphérique.

3. Assemblage pour prothèse dentaire suivant l'une des revendications 1 et 2, dans lequel au moins la surface (O) se compose d'oxyde d'aluminium ou renferme un tel composé.

4. Assemblage pour prothèse dentaire suivant la revendication 3, dans lequel l'oxyde d'aluminium est une rubine.

5. Assemblage pour prothèse dentaire suivant l'une des revendications précédentes, dans lequel le poinçon (3, 3', 3") comporte un alésage, dans lequel pénètre un support (1, 1') en forme de pivot.

6. Assemblage pour prothèse dentaire suivant la revendication 5, dans lequel le poinçon (3, 3', 3") et le support (1, 1') sont collés entre eux.

7. Assemblage pour prothèse dentaire suivant la revendication 1, dans lequel le poinçon (3") présente au moins un creux extérieur.

8. Assemblage pour prothèse dentaire suivant l'une des revendications 1 à 7, dans lequel le ressort de contention (10) est en forme de cercle.

9. Assemblage pour prothèse dentaire suivant la revendication 8, dans lequel le ressort de contention (10) se compose d'un acier à ressort allié, inoxydable.

10. Assemblage pour prothèse dentaire suivant l'une des revendications 8 et 9, dans lequel la matrice (6) est réalisée en deux parties.

11. Assemblage pour prothèse dentaire suivant la revendication 9, dans lequel la matrice (6) est formée d'un capuchon de contention (7) avec un filetage extérieur et d'un manchon de contention (8) avec un taraudage, et le manchon de contention (8) dépasse en forme de bride du capuchon (7), l'espace intermédiaire ainsi formé recevant le ressort de contention (10).

12. Assemblage pour prothèse dentaire suivant la revendication 1, dans lequel la surface (O) présente un revêtement réducteur de frottement.
